# EUROPÄISCHE PATENTANMELDUNG

(11) **EP 3 933 241 A1**
(43) Veröffentlichungstag der Anmeldung: **05.01.2022**
(21) Anmeldenummer: 21183056.7
(22) Anmeldetag: 01.07.2021
(51) Int. Cl.: F16L 1/028, E02D 17/08, F16L 1/036

(54) **VERFAHREN ZUM VERLEGEN VON ROHRLEITUNGEN**

(30) Priorität: 01.07.2020 DE 102020117312
(71) Anmelder: Forschungsinstitut für Flüssigboden GmbH, 04318 Leipzig (DE)
(72) Erfinder: Stolzenburg, Olaf, Leipzig (DE)
(74) Vertreter: Kailuweit & Uhlemann Patentanwälte Partnerschaft mbB

(57) **Zusammenfassung**

Gegenstand der vorliegenden Erfindung ist ein Verfahren zum Verlegen von Rohren im Erdreich. Das erfindungsgemäße Verfahren kann zur Herstellung von Erdgasleitungen, Fernwärmeleitungen oder sonstigen Gas- oder Flüssigkeitsleitungen aus Rohren mit kleinen bis großen Nennweiten im gesamten üblichen Spektrum verwendet werden. Besonders geeignet ist das Verfahren jedoch für Rohrleitungen mit Nennweiten größer DN 100. Weiterhin wird die Verwendung spezifischer Verbauboxen zur Durchführung des Verfahrens offenbart

## Beschreibung

Gegenstand der vorliegenden Erfindung ist ein Verfahren zum Verlegen von Rohren im Erdreich. Das erfindungsgemäße Verfahren kann zur Herstellung von Erdgasleitungen, Fernwärmeleitungen oder sonstigen Gas- oder Flüssigkeitsleitungen aus Rohren mit kleinen bis großen Nennweiten im gesamten üblichen Spektrum verwendet werden. Besonders geeignet ist das Verfahren jedoch für Rohrleitungen mit Nennweiten größer DN 100. Weiterhin wird die Verwendung spezifischer Verbauboxen zur Durchführung des Verfahrens offenbart.

Das erfindungsgemäße Verfahren ist insbesondere zum Einbau langer Rohre geeignet. Unter langen Rohren werden Rohre mit einer Länge größer als 6 m verstanden. Besonders geeignet ist das erfindungsgemäße Verfahren für Rohre mit Rohrlängen zwischen 12 und 24 m. Derartige Rohre finden insbesondere bei Fernwärmeleitungen Anwendung. Die dort genutzten Rohre weisen eine Isolierung auf, die nach dem Verschweißen der Rohre an der Verbindungsstelle zu isolieren ist. Darüber hinaus sind die Schweißnähte mittels Röntgen zu kontrollieren. Sowohl das Schweißen, das Isolieren als auch die röntgenologische Schweissnahtkontrolle werden von Spezialisten durchgeführt, deren Einsatz kostenintensiv ist und die rar und meist nicht permanent verfügbar sind.

Aus dem Stand der Technik ist eine Vielzahl von Verlegeverfahren für Rohrleitungen bekannt. So stellt die WO 2008/ 052 612 A1 die übliche Vorgehensweise für Pipelines und ähnliche lange Rohrleitungen dar. Diese Vorgehensweise besteht darin, einen Graben auszuheben, die Einzelrohre der Rohrleitung außerhalb des Grabens zu verschweißen und dann den verschweißten langen Teilstrang mit einer Vielzahl von Hebevorrichtungen in den Graben abzusenken. Die WO 2008/ 052 612 A1 versucht diesen Aufwand an Hebevorrichtungen zu reduzieren, indem eine stationäre Schweißvorrichtung vorgesehen ist, von der aus die aneinandergeschweißten Rohre in den Graben geschoben werden. Offensichtlich erfordert dieses Vorgehen eine Anzahl von Rollvorrichtungen, in denen der Rohrstrang mit verringerter Reibung axial geschoben werden kann.

Die WO 2017/ 148 662 A1 schlägt eine Trageinheit für ein freitragendes Verbausystem mit einem zumindest teilweise außerhalb eines Grabens anordbaren Stützbügel vor. In der vorgesehenen Verbaulage erstreckt sich dieser Stützbügel brückenartig über ein außerhalb und/oder oberhalb des Grabens anordbares und in den Graben absenkbares Rohr. Das dafür vorgesehene Rohr ist somit vor dem Absenken im Inneren des Stützbügels aufnehmbar. Die Trageinheit umfasst zwei zumindest teilweise im Inneren des Grabens anordbare und in Querrichtung der Trageinheit voneinander beabstandete Stützwände. Die beiden Stützwände schließen sich jeweils an eines der beiden Enden des Stützbügels an. Der Stützbügel und die beiden Stützwände bilden zusammen einen barrierefreien Absenkraum aus. Innerhalb dieses Absenkraums erstrecken sich demnach keine Querstreben, die ein Absenken des Rohres behindern würden. Aufgrund des barrierefreien Absenkraums kann demnach innerhalb von diesem das dafür vorgesehene Rohr vom Bereich des Stützbügels in den Bereich der Stützwände abgesenkt werden. Problematisch bleibt es jedoch weiterhin, die Rohre in den Absenkraum einzuführen und aufwendig an der Trageinheit einzuhängen.

Die US 6,893,189 B2 beschreibt eine kranartige Vorrichtung zur Verlegung von Rohren. Die Vorrichtung ist fahrbar auf einem mit Kettenlaufwerken ausgerüsteten Chassis angeordnet. Vorgesehen ist, dass die zu verlegenden Rohre in zwei Manschetten eingelegt werden, die über entsprechende Seile am Haken der kranartigen Verlegevorrichtung angeschlagen sind. Vorgesehen ist, dass die kranartige Verlegevorrichtung die Rohre von einem Zulieferfahrzeug aufnimmt und in den Graben absenkt. Offensichtlich ist hier nur ein offener Graben ohne Querstreben für Verbauabstützungen geeignet.

Erfahrungsgemäß ist der Einbau in verbaute Gräben umso komplizierte, je länger die einzubauenden Rohre sind und je weniger Bewegungsfreiheit im verbauten Graben besteht.

Die bereits bestehenden Verfahren und Vorrichtungen zum Einbau von langen Rohren in Gräben erfordern entweder einen umfangreichen Grabenaushub, bei dem sehr viel Erdreich bewegt werden muss und der eine große Belastung für Anwohner und ein umfangreiches Verkehrshindernis darstellt, oder komplexe Technik, die entsprechend kostenintensiv ist. Häufig ist beides vonnöten. Es besteht bisher auch keine Möglichkeit, bei den geschilderten Verfahren den kritischen Weg (im projektplanerischen Sinne) durch technische Lösungen und veränderte Arbeitsabläufe, die zwingend mit der erfinderischen Lösung verbunden sind, gezielt zu ändern, um über die verbesserte Parallelität der Arbeiten, die Leistung zu erhöhen. Denn es besteht keine Möglichkeit den technologischen Prozess der Verfüllung des Grabens von ansonsten vorher zu realisierenden Arbeitsgängen zu entkoppeln und damit die Arbeitsleistung als Ergebnis der Anwendung der erfindungsgemäßen Lehre deutlich positiv zu beeinflussen.

Es stellt sich somit die Aufgabe, ein Verfahren vorzuschlagen, dass es gestattet, einerseits lange Rohre mit relativ geringem Erdaushub kostengünstig und schnell zu verlegen und andererseits bei im Gegensatz zur herkömmlichen Bauweise deutlich erhöhtem Baufortschritt, keine langen, geöffneten und verbauten Gräben mehr zu benötigen, sondern nur noch kurze Straßenabschnitte für eine kontinuierliche und schnelle Bauweise öffnenzu müssen. Weiterhin soll dargestellt werden, wie spezifische Verbauboxen zur Durchführung des Verfahrens verwendet werden können.

Erfindungsgemäß wird die Aufgabe mit einem Verfahren nach Anspruch 1 gelöst. Vorteilhafte Ausgestaltungen des erfindungsgemäßen Verfahrens sind in den rückbezogenen Unteransprüchen offenbart.

Das erfindungsgemäße Verfahren zum Einbau langer Rohre sieht mindestens die folgenden Schritte vor:
a) Herstellen eines Grabenabschnitts, der die Länge des einzubauenden Rohres nur wenig übertrifft. (Im Minimum ist der Grabenabschnitt lediglich um den zur Herstellung einer Rohrverbindung benötigten Grabenbereich, z.B. 2 ― 5 m, länger, als das zu verlegende Rohr.),
b) Verbau des Grabenabschnitts mit Verbauelementen, wobei die Verbauelemente mit stützenden Aussteifungen (z.B. Spindeln, Rollenschlitten, Profile usw.) gegeneinander abgestützt sind, die sich so hoch über der Geländeoberkante befinden, dass die, vertikal, von der Grabensohle, gesehen, untere Aussteifung mindestens höher über der Geländeoberkante angeordnet ist, als der Außendurchmesser des einzubauenden Rohres,
c) Aufnahme des einzubauenden Rohres mit einer Hebevorrichtung oder einem Hebezeug (z.B. Bagger), wobei die Hebevorrichtung/Hebezeug eine Traverse aufweist an die das Rohr so angeschlagen wird, dass das Rohr von Aufhängungen gehalten wird,., wobei jeweils zwei voneinander entlang der Traverse beabstandete Aufhängungen eine Doppelaufhängung bilden und in der Nähe der Enden der Rohre angreifen.Optional sind weitere Doppelaufhängungen an Bereichen des Rohrs, die einer Unterstützung bedürfen, angeordnet. Die Aufhängungen können bei Bedarf auch unter Last mechanisch gelöst und wieder befestigt werden werden.
d) Heranführen des zu verlegenden Rohres an den Grabenabschnitt in dem es verlegt werden soll, derart, dass es sich parallel zur Grabensohle der ersten zu passierenden Aussteifung nähert, die am weitesten vom vorgesehenen Anschlusspunkt (Einbauposition) des zu verlegenden Rohres entfernt ist oder der, die dem Anschlusspunkt am nächsten liegt, wobei die Annäherung soweit erfolgt, bis die erste Aufhängung der Doppelaufhängung die Aussteifung erreicht (ein direktes Berühren sollte vermieden werden),
e) Einführen des Rohres gemäß Teilverfahren Aussteifungspassage
f) Wenn das Rohrende den Anschlusspunkt erreicht hat, Absenken des einzubauenden Rohres auf den Grabenboden, Positionierung des Rohres,
g) Optional: Verschweißen des Rohres, wenn notwendig auch Durchführung der Prüfungen der Schweißverbindung und/oder Isolierung des Rohrverbindungsabschnittes,
h) Verfüllen des Grabenabschnittes, Entfernen des Verbaus.

Optional schließt sich an Schritt h) das Herstellen eines weiteren Grabenabschnitts nach a) und die Wiederholung des gesamten Ablaufs an.

Das Teilverfahren Aussteifungspassage sieht mindestens die folgenden Schritte vor:
- Lösen der ersten Aufhängung einer Doppelaufhängung,
- Weiterer Vorschub des zu verlegenden Rohres unter der unteren Aussteifung hindurch, bis die zweite Aufhängung der Doppelaufhängung die Aussteifung erreicht (ein direktes Berühren sollte vermieden werden),
- Erneutes Befestigen der ersten Aufhängung der Doppelaufhängung, anschließend Lösen der zweiten Aufhängung der Doppelaufhängung,
- Weiterer Vorschub des zu verlegenden Rohres bis die zweite Aufhängung der Doppelaufhängung die Aussteifung passiert hat,
- Erneutes Befestigen der zweiten Aufhängung der Doppelaufhängung, sofern die zweite Aufhängung der Doppelaufhängung noch nicht die letzte zu passierende Aussteifung passiert hat,
- Wiederholen des sukzessiven Lösens der Aufhängung einer Doppelaufhängung vor einer Aussteifung und erneutes Befestigen der Aufhängung nach dem Passieren der Aussteifung bis zum Erreichen des Anschlusspunktes,

Das erfindungsgemäße Verfahren lässt sich zu drei Taktschritten zusammenfassen:
Takt 1: Schritte a) und b) Grabenaushub und Setzen des Verbaus
Takt 2: Schritte c) bis f) Rohrverlegung in Einbauposition
Takt 3: Schritte g) und h) Verfüllung des Grabens und Ziehen und Umsetzen des Verbaus

Wobei Takt 3 optional teilweise oder vollständig zeitgleich mit Takt 1 ausgeführt werden kann. Dies ist insbesondere möglich, wenn die gezogenen Verbauelemente nach dem Ziehen aus dem verfüllten Graben sofort wieder beim Ausheben des weiteren Grabens gesetzt werden. Der Arbeitsprozess kann so organisiert werden, dass im weiteren Verlauf der Arbeiten die Arbeitsschritte aller 3 Takte parallel erfolgen können. Deren Parallelität kann durch den Einsatz von weiteren, zu diesem Verfahren gehörenden Hilfsmitteln wie beispielsweise dem sogenannten RSS Mannlochverbau, gesteigert und damit die ansonsten technologisch bedingt anfallenden Wartezeiten (schweißen, isolieren, röntgen) minimiert bis vermieden werden Das Herstellen des Grabens (Aushub und Verbau) erfolgt mit Methoden nach dem Stand der Technik. Auch die beim Verbau eingesetzten Verbauelemente und Aussteifungen sind grundsätzlich aus dem Stand der Technik bekannt, können allerdings in ihrer Praxistauglichkeit noch verbessert werden. Insbesondere die Aussteifungen können mit Hilfe der durch das Angebot der Fa. SBH Tiefbautechnik GmbH, Ferdinand-Porsche-Straße 8, 52525 Heinsberg, Deutschland bekannte Lösungen, wie z.B. die Standardbox Serie 600 mit Überziehprofil oder analog zur WO 2017/ 148 662 A1 ausgeführt sein, wobei bei letzterer die Aussteifungen erfindungsgemäß im Gegensatz zu Lösung der der WO 2017/ 148 662 A1 keine Einhänge- und Absenkmöglichkeit für das zu verlegende Rohr aufweisen müssen. Da es sich um lange Rohre handelt, ist damit zu rechnen, dass für den Verbau des Grabens mehrere Verbauboxen hintereinander (in Grabenlängsrichtung gesehen) einzusetzen sind. Dementsprechend ist auch mit mehreren Aussteifungen zur Fixierung der Seitenwände der Verbauboxen (Aussteifungen für jedes Verbauelement in der typengemäß benötigten Art und Anzahl) zu rechnen. Die Aussteifungen sind vorzugsweise an den Enden der Seitenwände angeordnet. Bei dieser Bauweise können die Aussteifungen benachbarter Verbauboxen auch unmittelbar benachbart sein, sind im dargestellten Fall aber beabstandet, da die hier 5 m langen Verbauboxen im Abstand von einem Meter gesetzt wurden und der Graben auf der Außenseite der Boxen durch zwischen den Boxen gesetzte Stahlplatten gegen ein Zusammenbrechend er Grabenwände geschützt ist. Im Bereich der so entstehenden und 1 m breiten, durch die Stahlplatten geschützten Lücken werden die RSS Rohrverlegehilfen gesetzt, um beim Ziehen des Verbaus die Lage der Rohre nicht zu gefährden und den Verbau, unabhängig von den RSS Rohrverlegehilfen, ziehen zu können. Es ist im Falle von nicht auf Lücke gesetzter Verbauboxen bevorzugt, bei der Aussteifungspassage die beiden unmittelbar benachbarten Aussteifungen gemeinsam zu passieren, ehe die dafür gelöste Schlaufe der Doppelschlaufe wieder befestigt wird. Möglich sind jedoch auch andere Verbaulösungen, wie z.B. die o.g. auf der Außenseite der Verbauboxen parallel zum Graben temporär gesetzten Stahlplatten, welche diese Abstände zwischen den Verbauboxen deutlich vergrößern, was im Sinne flexibler Längen durch breite Stahlplatten auch beabsichtigt ist.

Bei der Hebevorrichtung handelt es sich vorzugsweise um einen auf der Baustelle ohnehin im Einsatz befindlichen Bagger nach dem Stand der Technik. Die Traverse ist als Aufnahmebügel oder ―träger ausgeführt, an dem die Doppelaufhängungen angeordnet werden können. Bevorzugt ist die Traverse ein Doppel-T-Träger einer Länge, die der des Rohres entspricht bzw. dieser zumindest nahekommt. Wesentlich ist, dass der Doppel-T-Träger die Doppelaufhängungen an den Enden des zu verlegenden Rohres und ggf. weitere dazwischen angeordnete Doppelaufhängungen zur Unterstützung, aufnehmen kann. Zur Befestigung der Doppelaufhängungen sind beispielsweise entsprechende Ösen oder Bohrungen an der Traverse vorgesehen. Analoges gilt für mindestens zwei Befestigungsmöglichkeiten, um die Traverse an der Hebevorrichtung zu befestigen.

Die Aufhängungen der Doppelaufhängungen weisen besonders bevorzugt einen Schnellverschluss auf, mit dem sie, vorzugsweise auch unter Last gelöst und wieder befestigt werden können.. Der Schnellverschluss kann dabei entweder manuell oder aber mittels einer z.B. elektronischen Vorrichtung geöffnet oder geschlossen werden (z. B. mittels Magnetverschluss). Die elektronisch zu betätigenden Schnellverschlüsse können optional einzeln oder zentral von einer Datenverarbeitungsvorrichtung angesteuert werden. In einer bevorzugten Ausführungsform ist eine der zwei Aufhängungen einer Doppelaufhängung als Seilzug ausgeführt, mit dessen Hilfe die Rohre bei geöffneter zweiter Aufhängung an jedem Aufhängpunkt, in ihrer Höhenlage zur Traverse verändert und so in den Graben herabgelassen werden können, wenn sich das an der Traverse hängende Rohrstück unter den aussteifenden Teilen des Verbaus und in der Einbauposition befindet. Optional sind beide Aufhängungen als Seilzug ausgeführt.

Das zu verlegende Rohr wird zumindest an den beiden Enden durch mindestens jeweils eine Doppelaufhängung gehalten. Optional können auch zwei parallel zu verlegende Rohre gemeinsam, nebeneinander, in den Doppelsaufhängungen gehalten werden und gleichzeitig, die Aussteifungspassage durchlaufen. Das Gleiche gilt für ein Rohrpaket von mehreren Rohren oder auch Leerrohren. Weitere Doppelaufhängungen können bei Bedarf das bzw. die Rohre an Punkten zwischen den beiden Doppelaufhängungen unterstützen. Die Aufhängungen der Doppelaufhängung können unter Last gelöst und auch wieder befestigt werden. Dazu dient bevorzugt ein Schnellverschluss. Es ist jedoch stets mindestens eine Aufhängung einer Doppelaufhängung befestigt bzw. geschlossen, solange das Rohr noch nicht in seiner Endposition ruht.

Der Abstand der beiden Aufhängungen einer Doppelaufhängung ist so zu bemessen, dass ein sicheres Bugsieren des Rohres nach dem Lösen einer Aufhängung möglich ist. Ein zu kleiner Abstand behindert dies, da kleine Schwingungen des Rohres so zu einem Kontakt der noch verbundenen Aufhängung mit einer Aussteifung führen könnten. Ein zu großer Abstand könnte zu einer unzureichenden Unterstützung des Rohres und damit zu dessen Verkrümmung führen oder mechanisch hinderliche Abläufe zur Folge haben, was auch bei einem zu kleinen Abstand möglich ist. Dies würde auch das erneute Schließen einer gelösten Aufhängung behindern. Als praktikabel hat sich bspw. bei kunststoffisolierten Fernwärmerohren ein Abstand der beiden Aufhängungen einer Doppelaufhängung von etwa 1 m ― 1,5 m erwiesen. Dieser Abstand kann jedoch in Abhängigkeit von den Eigenschaften des zu verlegenden Rohres und in Abhängigkeit vom Abstand der Verbauelemente und damit vom Abstand der Aussteifungen variieren. Auch die Position eventuell notwendiger weiterer Doppelaufhängungen zur zusätzlichen Unterstützung des Rohres zwischen den beiden Enden ist von Länge und Material sowie Abmessungen und zulässiger Durchbiegung des zu verlegenden Rohres abhängig. Entsprechende Herstellerangaben bzw. Berechnungsmöglichkeiten sind aus dem Stand der Technik bekannt.

Die Doppelaufhängungen sind in einer bevorzugten Lösung als Doppelschlaufen ausgeführt. Die Aufhängungen, in dieser Ausführungsform sind Schlaufen, die vorzugsweise als Gurte ausgeführt sind.

Eine alternative Ausführungsform zu den Gurten sieht jedoch auch als Schlaufen geführte Drahtseile (optional mit Verbreiterung zum Schutz der Rohre im Bereich des Kontaktes mit dem zu verlegenden Rohr) vor.

Eine weitere alternative Ausführungsform verwendet Drahtseile als Aufhängungen, die linear (ohne Schlaufen zur Aufnahme von Rohren) von der Traverse zum Rohr geführt werden. Diese Ausführungsform weist am unteren Ender der Drahtseile Haken zum Anschlagen der Rohre auf. Diese Ausführungsform ist besonders für Rohre geeignet, die bereits in der Außenhaut des Rohres vorhandene Ösen besitzen oder die um die Rohre verlaufende Bänder mit Ösen aufweisen Vorteilhaft können die Rohre mit dem Haken angeklickt werden.

Die Verbauelemente (insbesondere Seitenwände) bilden zusammen mit den stützenden Aussteifungen eine Verbaubox.

Das Einfädeln (Teilverfahren Aussteifungspassage) des zu verlegenden Rohres kann entweder so erfolgen, dass an der am weitesten vom Anschlusspunkt entfernten Aussteifung oder aber bei der am nächsten zum Anschlusspunkt gelegenen Aussteifung begonnen wrd. Im ersten Fall werden nachteilig ggf. parallel durchzuführende Aushubarbeiten des folgenden Grabenabschnittes behindert. Im zweiten Fall könnten noch durchzuführende Arbeiten im vorhergehend verlegten Grabenabschnitt hinderlich sein. Dies könnten z.B. Arbeiten in einem Mannloch an der Verbindungsstelle der vorher verlegten Rohre sein. Die geeignete Vorgehensweise kann vor Ort gewählt werden.

Optional kann der Voraushub (mindestens teilweiser Aushub des Grabens im folgenden Grabenabschnitt) im Abschnitt des nächsten Taktes genutzt werden, um bei Erreichen der maximalen Höhe der unteren Aussteifungen, egal in welcher Form diese ausgeführt sind, die einzubauenden Rohre dennoch in horizontaler Richtung zum Einbauort im Graben und unter den Aussteifungen hindurch zu bewegen. Bei dieser Vorgehensweise wird der folgende Grabenabschnitt mindestens bis zu einer solchen Tiefe ausgehoben, dass die Rohre unter den Versteifungen des Grabenabschnittes, in dem sie zu verlegen sind, hindurchgeführt werden können.

Weiterhin Optional kann der Voraushub in einem Teilabschnitt des nächsten Taktes genutzt werden, um bei Erreichen der maximalen Höhe der unteren Aussteifungen, egal in welcher Form diese ausgeführt sind, die einzubauenden Rohre dennoch in horizontaler Richtung zum Einbauort im Graben und unter den Aussteifungen in der beschriebenen Weise hindurch zu bewegen und dabei eine bei ausreichender Grabentiefe mögliche schräge Aufhängung an der beschriebenen Traverse zu nutzen, um das lange Rohrstück in die gewünschte Position bringen zu können.

Das Absetzen eines aus zwei oder mehr Rohrstücken bestehenden Rohrpaketes, aber auch eines einzelnen Rohres, im Graben auf vorbereiteten Punktauflagern z.B. aller 6 m ein Punktauflager bevorzugt aus entweder Flüssigboden der Konsistenz plastisch (Kp) oder mit trockenem Flüssigboden gefüllten Sandsäcken bzw. auf EPS Kissen am Einbauort, erfolgt durch Lösen der Aufhängungen ohne Seilzug und das Ablassen des Rohrpaketes/Rohrstückes mittels der Seilzüge an den verbliebenen Aufhängungen bis auf die Auflagerpunkte auf der Grabensohle. Dort erfolgt dann auch das Lösen der jeweils zweiten Aufhängung mit Seilzug an allen Aufhängpunkten des Rohrpaketes und das Entfernen der Traverse mit den Aufhängungen. Optional kann das Absenken des Rohres mittels der Traverse durchgeführt oder durch ein Absenken der Traverse unterstützt werden.

Die Bedienung der genutzten Seilzüge kann in manueller Form oder alternativ mittels einer Fernbedienung und einer entsprechenden Motorik z.B. kleine Elektromotoren erfolgen, mit deren Hilfe man die Seilzüge sowohl einzeln als auch alle Seilzüge gleichzeitig und synchron bedienen kann. Optional weisen die Schlaufen Kraftmessvorichtungen auf, die es gestatten, die auf die Schlaufen wirkende Last zu erfassen. Bevorzugt können diese Kraftmessvorrichtungen die erfassten Werte an eine Datenverarbeitungsvorrichtung übermitteln, die in einer bevorzugten Ausführungsform ebenfalls geeignet ist, die Motorik der Seilzüge zu steuern. Dies ermöglicht es insbesondere, die Motorik der Seilzüge so zu steuern, dass die Belastung aller Schlaufen gleich oder zumindest annähernd gleich ist. Optional kann alternativ oder zusätzlich eine Steuerung der Motorik der Seilzüge aufgrund von Benutzereingaben an der Datenverarbeitungsvorrichtung erfolgen.

Nach dem Absenken des Rohrpaketes (oder einzelnen Rohres) auf die Auflagerpunkte auf der Grabensohle und der Positionierung in der Einbaulage erfolgt die Verbindung des Rohres im Rohrgraben mittels Schweißung mit, nachträglicher Isolierung nach Prüfung der Schweißnaht mittels Röntgen, falls eine solche Prüfung notwendig ist

Vorzugsweise erfolgt das Verfüllen des Grabens in Takt 3 mit einem zeitweise fließfähigem Verfüllbaustoff. Dazu wird bevorzugt RSS Flüssigboden eingesetzt, dessen Eigenschaften auf die Erfordernisse der Baustelle, beispielsweise die für Fernwärmerohre benötigten Reibkräfte zwischen Rohr und Bettung, eingestellt werden können. Vorzugsweise wird Flüssigboden nach Rezepturen des Forschungsinstituts für Flüssigboden GmbH, Wurzner Straße 139, 04318 Leipzig, Deutschland, verwendet.

Bei RSS Flüssigboden handelt es sich um temporär fließfähig eingestelltes Verfüllmaterial, das bevorzugt aus dem Bodenaushub des Grabens, geeigneten Schichtmineralien und einigen optionalen Zuschlägen trocken gemischt und zeitversetzt unter Zusatz von Wasser fließfähig eingestellt wird. Das fleißfähige Gemisch wird in den zu verfüllenden Grabenabschnitt eingefüllt, wo es sich innerhalb einer vorgebbaren Zeit verfestigt, dabei mechanisch lösbar bleibt und in der Regel mit dem jeweiligen Umgebungsboden vergleichbar ist. Besonders vorteilhaft am Einsatz von RSS Flüssigboden ist dabei, dass dessen Eigenschaften auf die Erfordernisse der Baustelle eingestellt werden können, beispielsweise die für Fernwärmerohre benötigten Reibkräfte zwischen Rohr und Bettung zuverlässig erreicht werden.

Optional kann ein zu verfüllender Grabenabschnitt an einer oder beiden Stirnseiten durch Querwände so abgeschlossen werden, dass der eingefüllte Flüssigboden nicht aus dem zu verfüllenden Grabenabschnitt hinaus in benachbarte Grabenabschnitte verlaufen kann. Alternativ können natürlich auch herkömmliche Methoden der Grabenverfüllung eingesetzt werden.

Um Wartezeiten z.B. auf den Röntgenfachmann zu vermeiden, werden optional die Verbindungen der schon im Rohrgraben befindlichen Rohre (insbesondere bei Fernwärme), die noch geröntgt werden müssen mittels eines Mannlochverbaus gegen die Verfüllung mit Flüssigboden geschützt, während parallel der Graben mit geeignet eingestelltem temporär fließfähigem Verfüllmaterial, vorzugsweise RSS Flüssigboden, verfüllt wird.

Das Ziehen des für die nötige Montagefreiheit sorgenden Mannlochverbaus erfolgt zu einem beliebigen Zeitraum nach einem ausreichenden Rückverfestigen des Verfüllmaterials, so dass die noch an der Rohrverbindung fehlenden Arbeitsschritte z.B. Röntgen oder Schweißen bzw. Isolieren, zu einem beliebigen Zeitpunkt ausgeführt werden können und den weiteren Bauablauf nicht behindern.

Eine bevorzugte Weiterentwicklung des erfindungsgemäßen Verfahrens sieht vor, dass im Falle einer zu verschweißenden Rohrleitung z.B. Fernwärme- oder Gasleitungen zwei nacheinander zu verlegende Rohre bereits außerhalb des Grabens miteinander verbunden werden und erst dann nach dem erfindungsgemäßen Verfahren eingebaut werden.

Diese Arbeitsweise schafft die Möglichkeit, den (im Sinne der Projektplanung) kritischen Weg der Baustelle gezielt zu verändern. Ansonsten zu Wartezeiten zwingende Arbeiten (z.B. 50 % der Schweißungen, Isolierungen und Röntgenarbeiten) können jetzt parallel zu anderen Arbeiten (Aushub und Verbau und Grabenverfüllung) ausgeführt werden. Dadurch entsteht eine deutlich höhere Parallelität der Arbeiten.

Die Arbeiten außerhalb des Rohrgrabens stellen eine Art Pufferung für die Arbeitsleistungen der Schweißer, Isolierer, des Röntgenfachmann dar, da neben den Arbeiten im Rohrgraben auch außerhalb des Grabens Rohrverbindungen hergestellt werden können.

Diese Pufferarbeitskapazität beträgt im vorliegenden Beispiel etwa 50%. Statt Wartezeiten für die vorgenannten Spezialisten, können diese mit den Arbeiten außerhalb des Rohrgrabens beschäftigt werden. Die außerhalb des Grabens erfolgenden Arbeiten tragen zu einer erhöhten Parallelität der Arbeiten bei und helfen so, die Bauzeit, den Ressourcenbedarf und Kosten zu reduzieren.

Das erfindungsgemäße Verfahren bietet eine Reihe von Vorteilen:
- Die Rohrgräben können deutlich kürzer verbaut werden und sind auch sehr schnell wieder verfüllt und überbaubar bzw. überfahrbar, da getaktet gebaut werden kann.
- Mit den kürzeren Bauabschnitten an offenen Grabenbereichen entsteht ein deutlich geringerer Bedarf an einzusetzendem Verbau, was zu Kostenvorteilen für die "getaktete Flüssigbodenbauweise Fernwärme" führt.
- Mit kürzeren, verbauten und damit offenen Rohrgräben sind viel geringere Anwohner- und Verkehrsbehinderungen verbunden.
- Infolge der neuen Technologie der "getakteten Flüssigbodenbauweise Fernwärme" kommt es zu einer bedeutend höheren Bauleistung bei gleichzeitig geringerem Personalbedarf. Die Bauleistung bei herkömmlicher Bauweise lässt sich mit der neuen Bauweise mindestens verdoppeln. Bei guter Logistik und vorbereitender Planung lassen sich noch höhere Leistungszuwächse erzielen.
- Somit entstehen mit der neuen Technologie auch andere, deutlich günstigere Kostenstrukturen, die man mit der entsprechenden planerischen Vorleistung gut für den Netzbetreiber und Bauherrn nutzbar machen kann.
- Eine Entkopplung des reinen Verfüllvorgangs mit geeignet eingestelltem Flüssigboden vom Ausheben des Grabens und Setzen des Verbaus mit dem Ziel der Erhöhung der Parallelität der Arbeit ist mit dieser Technologie verbunden. Auch dies hilft Wartezeiten zu vermeiden und so die Bauleistung zu steigern.
- Die Vorfertigung von Rohrstücken außerhalb des Rohrgrabens, die länger als ein Einzelrohr sind führt zur Schaffung einer Pufferarbeitskapazität für den Einsatz von Schweißern, Isolierern und dem Röntgen. So wird kontinuierlicheres Arbeiten als bei reiner Rohrverbindung im Rohrgraben möglich, da geringere bis entfallende Wartezeiten für Schweißer, Isolierer und Röntgenfachleute mit dieser Arbeitsweise verbunden sind.
- Die geschilderte Arbeitsweise führt zu einer Veränderung des kritischen Weges (critical Path) für das Bauen in dieser Technologie und damit zu einer Möglichkeit, die Parallelität der Arbeiten und so auch die Arbeitsleistung zu maximieren.
- Eine Reihe von Wartezeiten, die als Folge der herkömmlichen Technologie entstehen, fällt weg. Das betrifft bspw. Wartezeiten für nacheinander erfolgende Arbeitsschritte (Reihenschaltung), wie z.B. Schweißen, Isolieren und Röntgen, die zu großen Teilen entfallen können, da diese 3 Arbeitsschritte bei der neuen Technologie sowohl im Graben, als auch parallel zu Arbeiten im Rohrgraben außerhalb des Rohrgrabens erfolgen können. Dies erhöht die Parallelität der Arbeiten (Parallelschaltung) und führt so zu einer weiteren Steigerung der Arbeitsleistung

### Figuren

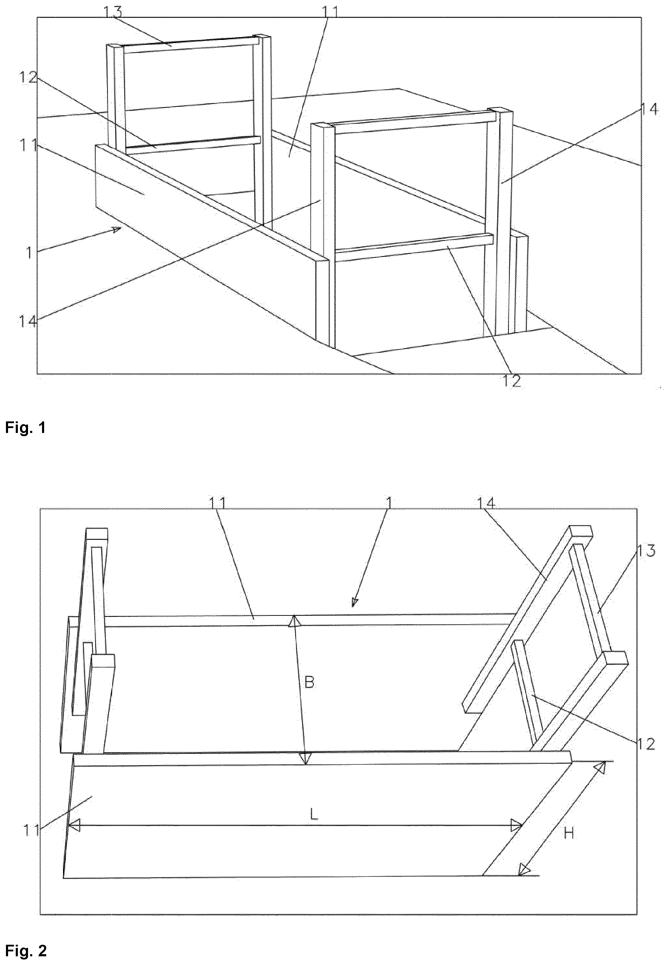

**Fig. 1** zeigt schematisch ein einzelnes Verbauelement, eine Verbaubox. Erkennbar sind die Aussteifungen, die die Seitenwände voneinander weghalten und die oberhalb der Geländeoberkante verlaufen. Der Grabenabschnitt, in dem ein Rohr bzw. mehrere Rohre verlegt werden, wird mit einer Aneinanderreihung von Verbauboxen gesichert, die auf den Außenseiten der Verbauplatten mit geeignet breiten Stahlplatten (z.B. 2 m breit und 2 cm stark) zwischen den Lücken gesichert werden, auf die die Verbauboxen aus technologischen Gründen (Setzen der RSS Rohrverlegehilfen an diesen Punkten in der Regel geplant) gesetzt werden.
**Fig. 2** zeigt schematisch die Verbaubox nach Fig. 1 aus einer anderen Perspektive.

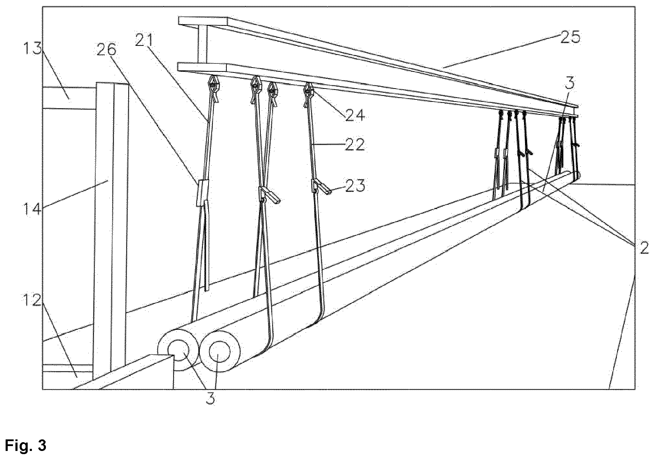

**Fig. 3** zeigt schematisch die Aufhängung von zwei parallel verlaufenden Rohren an der Traverse mittels als Doppelschlaufen ausgeführten Doppelaufhängungen.

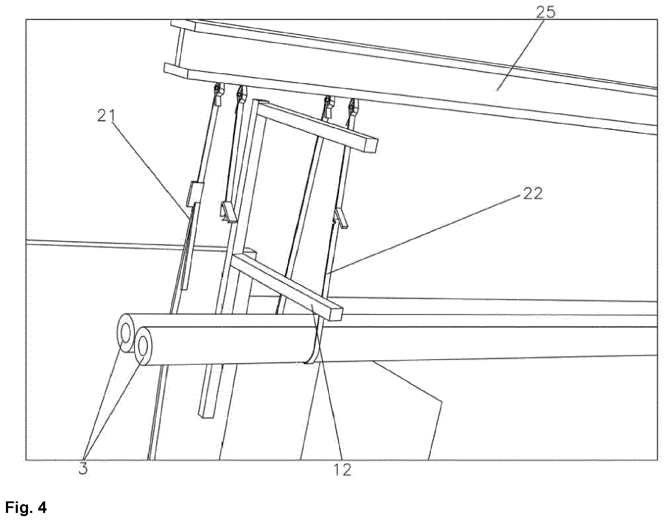

**Fig. 4** erläutert schematisch das Teilverfahren "Aussteifungspassage".

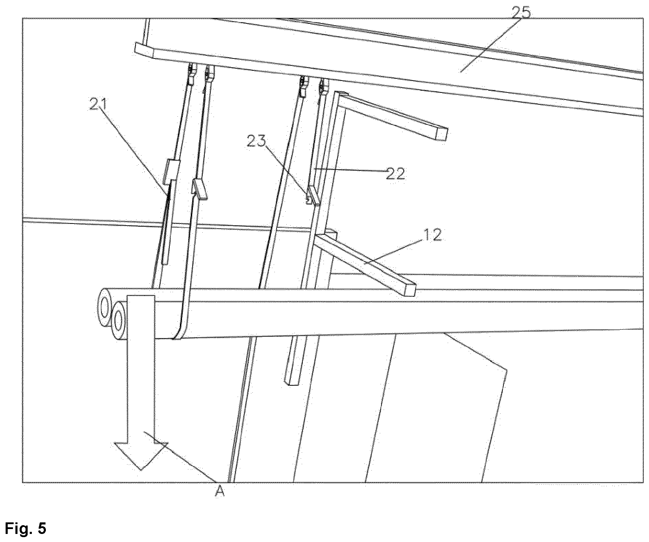

**Fig. 5** zeigt schematisch das Absenken von zwei parallel verlaufenden und im Rohrgraben zu verlegenden Rohren.

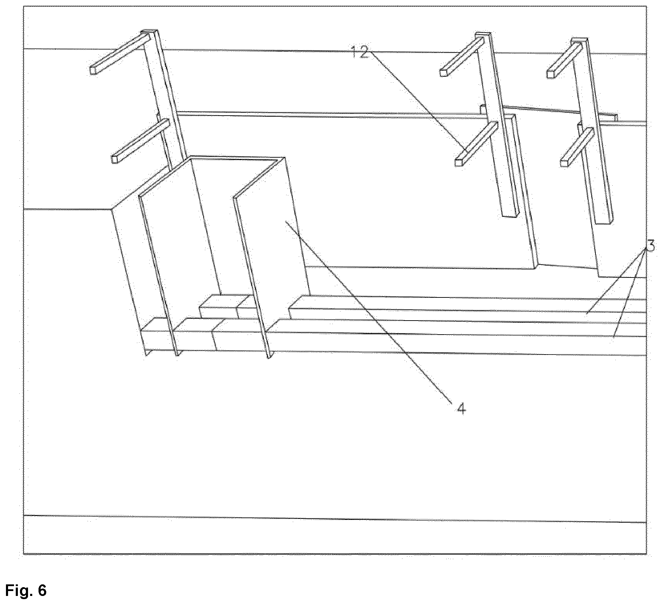

**Fig. 6** erläutert den Einsatz eines Mannlochverbaus um die Grabenverfüllung bis zur Herstellung des Straßenunterbaus noch vor der Beendigung des Verschweißens bzw. der optional notwendigen Prüfungs-(Röntgen) und Isolierungsarbeiten ausführen zu können.

Es ist eine Fernwärmetrasse mit zwei parallel verlaufenden Rohrsträngen 3 zu errichten. Es kommen kunststoffummantelte Rohre3, sogenannte KMR, einer Länge von 12 m zum Einsatz. Die einzelnen Rohre 3 haben einen Innendurchmesser des Stahlrohres von 300 mm und einen Außendurchmesser dieses Stahlrohres von 324 mm. Die Isolierung beträgt ca. 88 mm und die Rohre 3 erhalten einen Außendurchmesser von 500 mm. Bei Zusammensetzen der Rohre 3 zum Rohrstrang sind somit neben dem eigentlichen Verschweißen der Rohre 3 aneinander auch eine Kontrolle der Schweißnaht mittels Röntgens und in jedem Fall eine Wärmeisolierung der Schweißnaht notwendig.

Es ist vorgesehen, jeweils zwei einzelne Rohre 3 außerhalb des Grabens zu verschweißen und dann 24 m lange Rohrstücke oder Doppelrohrstücke einzubauen. Die Arbeiten zum Verschweißen, Röntgen und Isolieren des 24 m langen Rohres 3 erfolgen außerhalb des Grabens. Auf diese Weise können eine Reihe von Arbeiten zum Verbinden der Rohre3 weitgehend unabhängig von den Arbeiten im Graben erfolgen (im Idealfall 50%).

Es wird ein erster Grabenabschnitt von etwa 26 m Länge, einer Tiefe von 2 m und einer Breite von 1,8 m ausgehoben. Dieser wird in Grabenlängsrichtung mit sechs hintereinander angeordneten Verbauboxen 1 verbaut. Der mit Verbauboxen 1 ausgebaute Bereich überlappt teilweise mit dem bereits verlegten Bereich um die Anschlusspunkte zu den bereits verlegten Rohren 3 frei zu halten. Jede Verbaubox 1 weist zwei einander gegenüberliegende Seitenwände 11 auf, wobei jede Seitenwand 11 in diesem Fall eine Länge L von 5 m, eine Höhe H von 2,4m und eine Wandstärke von 12 cm besitzt. Der Abstand B der Seitenwände beträgt knapp 1,6 m. Die Seitenwände 11 des Verbaus sichern die Grabenwände gegen Einbrechen. Die Seitenwände der Verbauboxen 1 werden durch Aussteifungen 12, 13 in ihrem Abstand gehalten, wobei die von der Grabensohle her gesehen erste, die untere Aussteifung 12 auf dieser Baustelle in Höhe der Oberkante der Seitenwände 11 der Verbaubox 1 angreift. Die zweite Aussteifung 13 ist in einem vom Typ des eingesetzten Verbaus abhängigen und optional verstellbaren Abstand über der ersten angeordnet. Es sind jedoch auch verschiedene Verbautypen für die aktuelle Baustelle nutzbar. Die Kraftübertragung von den Seitenwänden 11 auf die Aussteifungen 12, 13 erfolgt über zwei an den Seitenwänden 11 angeordnete Holme 14, die sich über die gesamte Höhe der Seitenwände 11 erstrecken und zwischen denen die Aussteifungen 12, 13 angeordnet sind. So entsteht eine leiterartige Konstruktion mit einem offenen Freiraum unterhalb der unteren Aussteifung 13 bis zur Grabensohle. Die Aussteifungen 12, 13 sind an den Enden der Verbauboxen 1 angeordnet, so dass der Abstand von Aussteifungen 12, 13 zweier aneinander anschließender Verbauboxen 1 in diesem Falle (5 m Boxenlänge und 12 m Rohre) ca. 100 cm beträgt oder bedarfsgerecht mit Hilfe der auf den Außenseiten der Verbauboxen 1 gesetzten Stahlplatten auch größer gestaltet werden kann. An der ersten, auf Grund der durchzuführenden Schweißungen breiter als die anderen Verbauboxen 1 eingestellten Verbaubox 1 enden die bereits verlegten Rohrabschnitte und bilden die Anschlusspunkte für die zu verlegenden Rohre 3. Die Verbaubox 1 ragt in Abhängigkeit von dem gewählten Verbautyp und der zu setzenden Tiefe des Verbaus (bei standfestem Boden) zwischen 60 ― 80 cm über die Geländeoberkante heraus, so dass die untere Aussteifung 12 ebenfalls etwa 60 - 80 cm oberhalb der Geländeoberkante liegt. Damit können die zu verlegenden Rohre 3 unterhalb der unteren Aussteifung 12 unter dieser hindurchgeführt werden.

In den Graben werden nunmehr Auflagepunkte für die Rohre 3 eingebracht. Dazu werden aller 6 m ein Punktauflager aus, entweder Flüssigboden der Konsistenz plastisch (Kp) oder mit trockenem Flüssigboden gefüllten Sandsäcken bzw. EPS Kissen am Einbauort genutzt.

Als Hebevorrichtung kommt ein normaler Bagger (hier ein 26 t Bagger) zum Einsatz. Der Bagger ist der auf der Baustelle zum Aushub eingesetzte Bagger und somit ist kein zusätzliches Hebezeug erforderlich.

Der Bagger trägt eine 24 m lange Traverse 25, die aus einem Doppel-T-Träger (hier HEB 120) besteht. Die Traverse 25 ist über zwei Stahlseile an der des Baggerstiels befestigt. An der Traverse 25 sind drei Doppelaufhängungen, hier als Doppelschlaufen 2 ausgeführt, zur Aufnahme der zu verlegenden Rohre 3 angeordnet. Jede Doppelschlaufe 2 besteht aus zwei Schlaufen 21, 22, die mit einem Abstand von 1,6 m voneinander entfernt angeordnet sind jedoch nach Bedarf auch an der Traverse 25 versetzt werden können, um andere Abstände sicherzustellen. Zwei der Doppelschlaufen 2 sind in der Nähe der Enden der Traverse 25 (ca. 60 cm vom jeweilige Ende entfernt) die dritte Doppelschlaufe 2 ist in der Mitte der Traverse 25 angeordnet. Die Schlaufen 21, 22 bestehen aus Drahtseilen mit streifenförmigen Einlagen zur Schonung des Rohrmantels. Drei der sechs Schlaufen 21, 22 , je eine pro Aufhängpunkt, sind mit motorgetriebenen Seilzügen 26 zur Höhenverstellung ausgestattet. Alle Seilschlaufen 21, 22 sind mit Schnellschlussvorrichtung 23 zum schnellen Lösen und Befestigen unter Last ausgerüstet. Die Seile der Schlaufen 21. 22 sind ca. 10 m lang, so dass sich die zu verlegenden Rohre 3 im Transportzustand problemlos ca. 2 m unterhalb der Traverse 25 befinden bzw. je nach Bedarf positioniert werden können.

Nach dem Verschweißen, Röntgen und Isolieren der Rohre 3 außerhalb des Grabens liegen diese Rohrstücke, im aktuellen Beispiel paarweise mit einer Länge von 24 m, bereit.

Die Hebevorrichtung fährt zu dem bereitliegenden Rohrpaar3 und die Rohre 3 werden mittels der Doppelschlaufen 2 an der Traverse befestigt. Anschließend fährt die Hebevorrichtung zum Graben und positioniert sich so, dass sie parallel zum Graben verfahrbar ist. Das zu verlegende Rohrpaar 3 ist dabei höhenmäßig oberhalb des bereits verlegten Rohres positioniert. Die Hebevorrichtung führt nunmehr die Rohrenden an die erste untere Aussteifung 12 einer ersten Verbaubox 1 heran. Dabei wird das Rohrpaar 3 parallel zur Bodenoberfläche und zum Trassenverlauf geführt, bis die erste Schlaufe 21 die erste untere Aussteifung 12 erreicht, diese jedoch noch nicht berührt. Nunmehr wird die erste Schlaufe 21 gelöst. Anschließend wir das Rohrpaar 3 weiter parallel zum Boden unter der ersten unteren Aussteilung 12 hindurchgeführt, bis die zweite Schlaufe 22 die erste untere Aussteifung 12 erreicht. Nun wird die erste Schlaufe 21 wieder befestigt und danach die zweite Schlaufe 22 gelöst. Das Rohrpaar 3 wird weiter parallel zum Trassenverlauf (zum Graben) verschoben, bis die zweite untere Aussteifung 12 der ersten Verbaubox 1 erreicht ist. Nunmehr wird wieder die erste Schlaufe21 gelöst. Da die zweite untere Aussteifung 12 der ersten Verbaubox 1 und die erste untere Aussteifung 12 der zweiten Verbaubox 1 lediglich ca. 120 cm voneinander entfernt sind, wird die erste Schlaufe 21 erst nach dem Passieren auch der ersten unteren Aussteifung der zweiten Verbaubox 1 wieder befestigt und anschließend die zweite Schlaufe 22 gelöst. Dieses Vorgehen des Vorschubs mit Lösen und Wiederbefestigen der Schlaufen 21, 22 wird fortgesetzt, bis das Rohrpaar 3 soweit über den Graben bewegt wurde, dass sein Ende über dem Anschlusspunkt bzw. den Anschlusspunkten der beiden Rohre 3 an die bereits verlegten Rohre positioniert ist. Nunmehr wird jeweils eine der Schlaufen21, 22 einer Doppelschlaufe 2 gelöst und entfernt.

Das Rohrpaar 3 hängt nunmehr in den drei verbliebenen Schlaufen, die mit den motorgetriebenen Seilzügen 26 ausgerüstet sind. Mittels der motorgetriebenen Seilzüge 26 dieser 3 Schlaufen wird das Rohrpaar 3 in den Graben abgesenkt, wobei die Antriebe an den Seilzügen 26, gesteuert von einer Datenverarbeitungsvorrichtung (Laptop nach dem Stand der Technik mit Bedienelement) derart synchron betrieben werden, dass das Absenken gleichmäßig, ohne unzulässige Knickmomente erfolgt.

Nach dem Positionieren der Rohre 3 in der notwendigen Lage, werden diese auf den Punktauflagern abgelegt und dadurch fixiert.

Anschließend werden die verbliebenen 3 Schlaufen gelöst. Danach wird bei Bedarf (wenn Schweißen und Isolieren nicht unmittelbar nach dem Einbau der Rohre 3 erfolgen können) ein vorgefertigter Mannlochverbau 4 über dem Anschlusspunkt positioniert und mittels plastisch eingestelltem RSS Flüssigboden abgedichtet. Die Abmessungen des Mannlochverbaus ermöglichen die noch erforderlichen Arbeiten nach Vorgabe des Arbeitsschutzes. Des Weiteren wird das Ende des Grabens durch ein Querschott so abgeschlossen, dass die Enden der soeben verlegten Rohre 3 unter dieser, durch vorgefertigte Öffnungen im Schott hinausragen. Diese Rohrenden bilden die Anschlusspunkte für die nachfolgend zu verlegenden Rohre. Der Graben wird nunmehr mit RSS Flüssigboden verfüllt, dessen bodenmechanischen, technologischen und Gebrauchseigenschaften (Reibkräfte) auf die konkreten Anwendungen der Baustelle abgestimmt wurden. Durch die flüssige Konsistenz des Verfüllmaterials und seine Schwindungsfreiheit werden die Rohre vollumfänglich und dauerhaft sicher gebettet.

Sobald der Flüssigboden in den Graben eingefüllt wurde, können bei Einsatz eines Mannlochverbaus 4 die Arbeiten zum Verschweißen, Röntgen der Schweißverbindung und zum Isolieren auch später durchgeführt werden, wenn beispielsweise der normale Verbau 1 bereits gezogen worden ist. Nach deren Abschluss wird der Verbau des Mannloches 4 gezogen und die verbliebene Öffnung über der Verbindungsstelle der Rohre ebenfalls mit Flüssigboden verfüllt. Nach dem Rückverfestigen des Flüssigbodens kann das Querschott am Grabenende ebenfalls entfernt werden. Anschließend wird die Oberflächengestaltung des verfüllten Grabenabschnittes vorgenommen (bspw. Straßen- oder Wegebau, Grünflächen etc.).

Bereits nach dem Setzen des Verbaus im ausgehobenen Graben können das Ausheben des folgenden Grabenabschnitts, einschließlich des Setzens des Verbaus und damit erneut die Arbeiten des ersten Taktes vorgenommen werden.

Insgesamt beträgt somit der minimal genutzte Bereich für die Baumaßnahme etwas mehr als vier Rohrlängen, also 48 m, bei eingespielter Taktung und damit der Arbeit in 3 Takten etwa 72 m.

### Bezugszeichenliste

- 1: Verbauelement (Verbaubox)
- 11: Seitenwand der Verbaubox
- 12: untere Aussteifung
- 13: obere Aussteifung
- 14: Seitenholm
- 2: Doppelaufhängung (hier: Doppelschlaufe)
- 21: erste Aufhängung (hier: erste Schalufe)
- 22: zweite Aufhängung (hier: zweite Schlaufe)
- 23: Schnellverschluss
- 24: Befestigung an der Traverse
- 25: Traverse
- 26: Seilzug
- 3: Rohre
- 4: Verbaubox für Mannloch

- L: Länge der Verbaubox
- B: Breite der Verbaubox
- H: Höhe der Verbaubox

## Patentansprüche

1. Verfahren zur Verlegung von langen Rohren (3) in Gräben, mindestens die folgenden Schritte aufweisend:
a) Herstellen eines Grabenabschnitts, der die Länge des einzubauenden Rohres (3) im Minimum nur um die Länge zur Herstellung einer Rohrverbindung benötigten Grabenbereiches z.B. 2 ― 5 m übertrifft,
b) Verbau des Grabenabschnitts mit Verbauelementen, wobei die Verbauelemente mit stützenden Aussteifungen (12, 13) (z.B. Spindeln, Rollenschlitten, Profile usw.) gegeneinander abgestützt sind, die sich so hoch über der Geländeoberkante befinden, dass die, vertikal von der Grabensohle, gesehen, untere Aussteifung (12) mindestens höher über der Geländeoberkante angeordnet ist, als der Außendurchmesser des einzubauenden Rohres 3,
c) Aufnahme des einzubauenden Rohres (3) mit einer Hebevorrichtung, wobei die Hebevorrichtung eine Traverse (25) aufweist, an die das Rohr (3) so angeschlagen wird, dass das Rohr (3) in Aufhängungen (z. B. Drahtseil- oder Gurtschlaufen) ruht, wobei jeweils zwei voneinander entlang der Traverse (25) beabstandete Aufhängungen (2) (Doppelaufhängungen) in der Nähe der Enden der Rohre (3) angreifen und wobei die Aufhängungen (2) unter Last lösbar und wieder befestigbar sind und wobei mindestens eine der beiden Aufhängungen (2) einen Seilzug (26) zum Anheben oder Absenken des Rohres (3) aufweist,
d) Heranführen des zu verlegenden Rohres (3) an den Grabenabschnitt in dem es verlegt werden soll, derart, dass es sich parallel zur Grabensohle der Aussteifung (12, 13) nähert, die am weitesten vom vorgesehenen Anschlusspunkt des zu verlegenden Rohres (3) entfernt ist oder der, die dem Anschlusspunkt am nächsten liegt, wobei die Annäherung soweit erfolgt, bis die erste Aufhängung (12, 13) der Doppelaufhängungen (2) die Aussteifung (12, 13) erreicht (ein direktes Berühren sollte vermieden werden),
e) Einführen des Rohres (3) gemäß folgendem Teilverfahren "Aussteifungspassage":
- Lösen der ersten Aufhängung (21) einer Doppelaufhängung (2),
- Weiterer Vorschub des zu verlegenden Rohres unter der unteren Aussteifung (12) hindurch, bis die zweite Aufhängung (22) der Doppelaufhängungen (2) die Aussteifung (12, 13) erreicht (ein direktes Berühren sollte vermieden werden),
- Erneutes Befestigen der ersten Aufhängung (21) der Doppelaufhängung (2), anschließend Lösen der zweiten Aufhängung (22) der Doppelaufhängung (2),
- Weiterer Vorschub des zu verlegenden Rohres (3) bis die zweite Aufhängung (22) der Doppelaufhängung (2) die Aussteifung (12, 13) passiert hat,
- Erneutes Befestigen der zweiten Aufhängung (22) der Doppelaufhängung (2), sofern die zweite Aufhängung (22) der Doppelaufhängung (2) die Aussteifung (12, 13) passiert hat,
- Wiederholen des sukzessiven Lösens der Aufhängung (21, 22) einer Doppelaufhängung (2) vor einer Aussteifung (12, 13) und erneutes Befestigen der Aufhängung (21, 22) nach dem Passieren der Aussteifung (12, 13) bis das zur Montage vorgesehene Rohrende den Anschlusspunkt erreicht hat,
f) wenn das Rohrende den Anschlusspunkt erreicht hat, Absenken des einzubauenden Rohres (3) auf der Grabensohle, Positionierung des Rohres (3), bei Bedarf auf geeigneten Punktauflagern,
g) Verschweißen des Rohres (3), wenn notwendig auch Durchführung der Prüfungen der Schweißverbindung und/oder Isolierung des Rohrverbindungsabschnittes,
h) Verfüllen des Grabenabschnittes und Ziehen des Verbaus.

2. Verfahren nach Anspruch 1, **dadurch gekennzeichnet, dass** das Rohr(3) durch weitere Doppelaufhängungen (2) in Bereichen des Rohrs (3), die einer Unterstützung bedürfen, gehalten wird.

3. Verfahren nach einem der vorhergehenden Ansprüche, **dadurch gekennzeichnet, dass** im Teilverfahren "Aussteifungspassage" auf ein erneutes Befestigen der zweiten Aufhängung (22) der Doppelaufhängung (2) verzichtet werden kann, sofern die zweite Aufhängung 822) der Doppelaufhängung (2) die letzte zu passierende Aussteifung (12, 13) passiert hat und die erste Aufhängung (21) einen Seilzug (26) zum Absenken des Rohres (3) aufweist.

4. Verfahren nach einem der vorhergehenden Ansprüche, **dadurch gekennzeichnet, dass** mindestens eine der pro Doppelaufhängung (2) je 2 Aufhängungen (21, 22) Motoren aufweisen, mit deren Hilfe die Seilzüge (26) sowohl einzeln als auch alle Seilzüge (26) gleichzeitig und synchron bedient werden, oder aber, dass eine manuelle Bedienung der Seilzüge (26) erfolgt.

5. Verfahren nach Anspruch 4 **dadurch gekennzeichnet, dass** die Aufhängungen (21, 22) Kraftmessvorrichtungen aufweisen, die es gestatten, die auf die Aufhängungen (21, 22) wirkende Last zu erfassen.

6. Verfahren nach Anspruch 5 **dadurch gekennzeichnet, dass** die Kraftmessvorrichtungen die erfassten Werte an eine Datenverarbeitungsvorrichtung übermitteln, die geeignet ist, die Motoren der Seilzüge (26) aufgrund der Messwerte der Kraftmessvorrichtungen der Aufhängungen (21, 22) und/oder von Benutzereingaben zu steuern.

7. Verfahren nach einem der vorhergehenden Ansprüche, **dadurch gekennzeichnet, dass** die Lösbarkeit und Befestigbarkeit der Aufhängungen (21, 22) entweder durch manuell bedienbare Schnellverschlüsse (23) oder durch elektronisch bedienbare Schnellverschlüsse (23), bspw. durch Magnetverschlüsse, realisiert wird.

8. Verfahren nach einem der vorhergehenden Ansprüche, **dadurch gekennzeichnet, dass** die Aufhängungen (21, 22) Schlaufen sind, die als Gurte oder als Drahtseile, optional mit Verbreiterung zum Schutz der Rohre im Bereich des Kontaktes mit dem zu verlegenden Rohr (3), ausgeführt. sind oder aber, dass die Aufhängungen (21, 22) als Drahtseile, die linear (ohne Schlaufen zur Aufnahme von Rohren) von der Traverse (25) zum Rohr (3) geführt sind und das Rohr (3) mittels Haken an dafür vorgesehenen Ösen aufnehmen, ausgeführt sind.

9. Verfahren nach einem der vorhergehenden Ansprüche, **dadurch gekennzeichnet, dass** Schritt g) parallel zu Schritt h) oder nach Schritt h) erfolgt, wobei der Anschlusspunkt des Rohres (3) mittels eines Mannlochverbaus (4) nach dem Ziehen des regulären Verbaus von der Verfüllung des Grabens ausgenommen wird und die Arbeiten zum Verbinden der Rohrenden nach Schritt g) in diesem Mannlochverbau (4) durchgeführt werden und dass nach Beendigung der Arbeiten nach Schritt g) oder nach einer ausreichenden Rückverfestigung des Verfüllmaterialsder Mannlochverbau (4) entfernt und das Mannloch verfüllt wird.

10. Verfahren nach einem der vorhergehenden Ansprüche, **dadurch gekennzeichnet, dass** zwei Einzelrohre vor Schritt c) außerhalb des Grabens miteinander zu einem Rohr (3) verschweißt und isoliert werden und, wenn notwendig, die Prüfungen der Schweißverbindung und die Isolierung des Rohrverbindungsabschnittes ebenfalls außerhalb des Grabens erfolgen.

11. Verfahren nach einem der vorhergehenden Ansprüche, **dadurch gekennzeichnet, dass** mehrere, insbesondere zwei, parallel zu verlegende Rohre (3) gleicher Länge oder ein Rohr- oder Leerrohrbündel, gleichzeitig entsprechend Schritt c) aufgenommen und dann entsprechend dem Verfahren verlegt werden.

12. Verfahren nach einem der vorhergehenden Ansprüche, **dadurch gekennzeichnet, dass** ein Voraushub im Abschnitt des nächsten Taktes genutzt wird, um bei Erreichen der maximalen Höhe der unteren Aussteifungen (12), egal in welcher Form diese ausgeführt sind, die einzubauenden Rohre (3) dennoch in horizontaler Richtung zum Einbauort im Graben und unter den Aussteifungen (12, 13) in der Art der vorherigen Ansprüche zu bewegen.

13. Verfahren nach einem der vorhergehenden Ansprüche, **dadurch gekennzeichnet, dass** ein Voraushub in einem Teilausschnitt des nächsten Taktes, um bei Erreichen der maximalen Höhe der unteren Aussteifungen (12), egal in welcher Form diese ausgeführt sind, die einzubauenden Rohre (3) dennoch in horizontaler Richtung zum Einbauort im Graben und unter den Aussteifungen (12, 13) in der Art der vorherigen Ansprüche zu bewegen und dabei eine bei ausreichender Grabentiefe mögliche schräge Aufhängung an der beschriebenen Traverse (25) zu nutzen, um das lange Rohrstück in die gewünschte Position bringen zu können

14. Verfahren nach einem der vorhergehenden Ansprüche, **dadurch gekennzeichnet, dass** in Schritt f) das Absenken des Rohrstückes oder Rohrbündels etc. erfolgt, indem die Traverse (25) abgesenkt wird und/oder indem die Aufhängungen (21, 22) ohne Seilzug (26) gelöst werden und das Rohrstück mit den Seilzügen (26) der verbliebenen Aufhängungen (21, 22) abgesenkt wird.

15. Verfahren nach einem der vorhergehenden Ansprüche, **dadurch gekennzeichnet, dass** die einzubauenden Rohrstücken an ihrer Außenseite Ösen oder Seilschlaufen mit Ösen oder andere Vorrichtungen zur Ankopplung aufweisen, die die schnelle Ankopplung an Haken und/oder Seile der Aufhängungen (21, 22) an der Traverse (25) ermöglichen.

16. Verfahren nach einem der vorhergehenden Ansprüche, **dadurch gekennzeichnet, dass** in Schritt h) zum Verfüllen des Grabens ein zeitweise fließfähiger Verfüllbaustoff, vorzugsweise RSS Flüssigboden verwendet wird.

17. Verfahren nach einem der vorhergehenden Ansprüche, **dadurch gekennzeichnet, dass** eine getaktete Bauweise angewandt wird, bei der die Schritte des Verfahrens zu folgenden Takten zusammengefasst werden:
- Takt 1: Schritte a) und b)
- Takt 2: Schritte c) bis g)
- Takt 3: Schritt h)
und dass Takt 3 teilweise oder vollständig zeitgleich mit Takt 1 ausgeführt wird oder auch alle 3 Takte gleichzeitig und damit parallel ausgeführt werden können.

18. Verwendung von mindestens einer Verbaubox (1) in einem Verfahren nach einem der vorhergehenden Ansprüche, wobei die Verbaubox (1) zwei einander gegenüberliegende Seitenwände (11) aufweist, die durch Aussteifungen (12, 12) in Ihrer Position gehalten werden, und wobei die von der Grabensohle her gesehen untere Aussteifung (12) so weit über der Geländeoberkante angeordnet ist, dass die jeweiligen Rohre (3) unter der unteren Aussteifung (12) parallel zur Grabensohle in die Einbauposition geführt werden können.

19. Verwendung nach Anspruch 18 von mindestens einer Verbaubox, (1) die über eine Möglichkeit verfügt, die Aussteifungen (12, 13) höhenvariabel zu gestalten und so die Höhe der untersten der Aussteifung (12) immer so zu gestalten, dass die einzubauenden Rohre (3) unterschiedlicher Nennweiten horizontal unter der von der Grabensohle her gesehen unteren Aussteifung (12) bewegt werden können.

20. Verwendung nach Anspruch 18 oder 19 von mindestens einer Verbaubox, (1) die einen höhenvariabel einstellbaren Rollenschlitten verwendet, dessen statisch ausreichend dimensionierte Führung in einer Höhe über die Oberkante des Geländes geführt werden kann, dass die einzubauenden Rohre (3) in horizontaler Richtung unter dem Rollenschlitten in die Einbauposition bewegt werden können.
